# EUROPÄISCHE PATENTSCHRIFT

(11) **EP 3 669 159 B1**
(45) Veröffentlichungstag und Bekanntmachung des Hinweises auf die Patenterteilung: **29.01.2025**
(21) Anmeldenummer: 18756411.7
(22) Anmeldetag: 16.08.2018
(51) Int. Cl.: G01N 1/04, B23H 7/28, B23H 7/30, G21C 17/01

(54) **ERODIERVORRICHTUNG ZUR DURCHFÜHRUNG EINES ERODIERPROZESSES ZUR ENTNAHME VON WERKSTOFFPROBEN AUS METALLISCHEN KOMPONENTEN VON KERNKRAFTWERKEN, VERWENDUNG EINER ERODIERVORRICHTUNG, SOWIE VERFAHREN ZUR ENTNAHME VON WERKSTOFFPROBEN**
EROSION DEVICE FOR PERFORMING AN EROSION PROCESS FOR TAKING MATERIAL SAMPLES OF METAL COMPONENTS OF NUCLEAR POWER PLANTS, USE OF AN EROSION DEVICE, AND METHOD FOR TAKING MATERIAL SAMPLES
DISPOSITIF D'ÉROSION SERVANT À EFFECTUER UN PROCESSUS D'ÉROSION SERVANT À RETIRER DES ÉCHANTILLONS DE MATÉRIAU DE COMPOSANTS MÉTALLIQUES DE CENTRALES NUCLÉAIRES, UTILISATION D'UN DISPOSITIF D'ÉROSION, AINSI QUE PROCÉDÉ SERVANT À RETIRER DES ÉCHANTILLONS DE MATÉRIAU

(30) Priorität: 18.08.2017 DE 102017118935
(43) Veröffentlichungstag der Anmeldung: 24.06.2020
(73) Patentinhaber: Framatome GmbH, 91052 Erlangen (DE)
(72) Erfinder: MÜLLER, Harald, 91077 Dormitz (DE); ZEIKE, Wolfgang, 91077 Dormitz (DE); NORDHARDT, Günter, 91056 Erlangen (DE)
(74) Vertreter: Lavoix
(86) Internationale Anmeldenummer: PCT/EP2018/072176
(87) Internationale Veröffentlichungsnummer: WO 2019/034721

(56) Entgegenhaltungen:
- FR-A1- 2 879 949
- JP-A- 2001 079 658
- JP-A- H1 076 427
- US-A- 5 268 550

## Beschreibung

Die Erfindung betrifft eine Erodiervorrichtung zur Durchführung eines Erodierprozesses zur Entnahme von Werkstoffproben aus metallischen Komponenten einer Wandung, vorzugsweise der Innenwand, eines Reaktordruckbehälters. Ferner betrifft die Erfindung die Verwendung einer Erodiervorrichtung sowie ein Verfahren zur Entnahme von Werkstoffproben aus metallischen Komponenten einer Wandung, vorzugsweise der Innenwand, eines Reaktordruckbehälters.

In Kernkraftwerken kann die Notwendigkeit bestehen, die Materialproben metallischer Komponenten des Kernkraftwerks, beispielsweise des Reaktordruckbehälters oder anderer Kerneinbauten zur Materialprüfung zu entnehmen. Hierbei kann es nötig sein, verhältnismäßig große Werkstoffproben, beispielsweise bis zu einer Tiefe von 100mm, aus dem Reaktordruckbehälter, insbesondere von der Innenwand des Reaktordruckbehälters, zu entnehmen.

Bisher konnten nur Werkstoffproben in Schiffchengeometrie (bzw. Kugelsegment) durch Schleifverfahren entnommen werden. Dabei sind allerdings nur Werkstoffproben bis zu einer Tiefe von 10mm möglich. Das heißt diese relativ kleinen Werkstoffproben mussten bisher ausreichend für die Durchführung von Untersuchungen sein.

JPH1076427A und JPH07159295A betreffen eine bootsförmige Funkenerosionselektrodein einer Probenentnahmevorrichtung für eine Struktur in einem Kernreaktor. Insbesondere offenbart JPH07159295A ein Befestigungselement und eine Sammel- und/oder Auffangvorrichtung.

JP2001079658A betrifft eine Probenentnahme Vorrichtung mit einer Elektrode. Insbesondere offenbart JP2001079658A zunächst eine lineare Bewegung der Elektrode und dann eine Rotationsbewegung der Elektrode während des Erodierprozesses, um eine Düse zu entnehmen.

US5268550A betrifft Verfahren und Vorrichtung zum Entfernen einer Probe, insbesondere einer parallelepipedischen Probe, aus der Innenwand des Behälters eines Kernreaktors. FR2879949A1 ein Verfahren zur Fernbearbeitung einer Zone einer Metallwand eines Teils bei dem eine Elektrode direkt am freien Ende eines Roboterarms angebracht wird.

Es ist Aufgabe der Erfindung eine neue Erodiervorrichtung anzugeben, insbesondere eine Erodiervorrichtung mit der es möglich ist, Werkstoffproben aus metallischen

Komponenten von Kernkraftwerken, insbesondere aus der Wandung, vorzugsweise der Innenwand, eines Reaktordruckbehälters zu entnehmen, deren Geometrie sowie Größe beliebig wählbar ist. Ferner ist es Aufgabe der Erfindung eine neue Verwendung einer Erodiervorrichtung sowie eine neues Verfahren zur Entnahme von Werkstoffproben aus metallischen Komponenten von Kernkraftwerken, insbesondere aus der Wandung, vorzugsweise der Innenwand, eines Reaktordruckbehälters, anzugeben.

Diese Aufgabe wird hinsichtlich der Erodiervorrichtung gelöst durch die Merkmale des Anspruchs 1, hinsichtlich der Verwendung der Erodiervorrichtung durch die Merkmale des Anspruchs 9 und hinsichtlich des Verfahrens durch die Merkmale des Anspruchs 10. Vorteilhafte Ausgestaltungen und Weiterbildungen sind in den jeweils abhängigen Ansprüchen angegeben.

Die erfindungsgemäße Erodiervorrichtung umfasst einen Erodierkopf, wobei der Erodierkopf wenigstens eine Erodierelektrode aufweist, wobei die Erodierelektrode zumindest abschnittsweise eine konvexe oder eckige Außenform aufweist, und wobei der Erodierkopf ein Bewegungsleitsystem zum Positionieren und/oder Bewegen der Erodierelektrode aufweist, wobei das Bewegungsleitsystem wenigstens vier Achsen zum Ausführen von Bewegungen der Erodierelektrode zur Erzeugung einer vorgesehenen Werkstoffprobengeometrie umfasst, wobei die Bewegungen auch während des Erodierprozesses ausführbar sind.

Die Bewegungen können eine Kombination verschiedener Linear- und Rotationsbewegungen sein.

Alle mit der erfindungsgemäßen Erodiervorrichtung möglichen Bewegungen der Erodierelektrode können gleichzeitig ansteuerbar sein, insbesondere auch während des Erodierprozesses, so dass sich eine Kombinationsbewegung ergibt. Es ist eine Steuereinrichtung vorgesehen, welche dazu ausgebildet ist, die Bewegung oder Bewegungen einzeln oder gleichzeitig anzusteuern, vorzugsweise fernzusteuern.

Die erfindungsgemäße Erodiervorrichtung ist dazu ausgebildet, gleichzeitig den Erodierprozess durchzuführen sowie die Erodierelektrode zu bewegen.

Es ist somit vorgesehen sein, dass die Erodierelektrode mit dem Bewegungsleitsystem zum einen zur Positionierung der Erodierelektrode vor dem Erodierprozess bewegbar ist und die Erodierelektrode zum anderen zur Erzeugung einer vorgesehenen Werkstoffprobengeometrie während des Erodierprozesses bewegbar ist.

Bei dem Reaktordruckbehälter handelt es sich um den Reaktordruckbehälter in einem Kernkraftwerk. Als Erosionsprozess ist vorzugsweise Funkenerosion vorgesehen. Beim Erodieren ist sowohl Hinterschnitterosion als auch Stufenerosion möglich.

Die Vorteile der Erfindung liegen insbesondere darin, dass mit der erfindungsgemäßen Erodiervorrichtung eine beliebige Kontur und Größe der Werkstoffproben erzeugt werden kann. Durch die Möglichkeit Kontur und Größe der Werkstoffproben zu bestimmen, können auch Fehlerstellen an oder in der Oberfläche von metallischen Komponenten des Kernkraftwerks, wie beispielsweise der Wandung des Reaktordruckbehälters, entfernt werden. Ferner werden Sacklochproben sowie Durchgangsproben gleichermaßen ermöglicht.

Durch die mobile, modulare Bauweise und die minimale Baugröße sowie das geringe Gewicht der Erodiervorrichtung werden flexible Einsatzmöglichkeiten geschaffen, insbesondere auch bei geringen Platzverhältnissen. Die Erodiervorrichtung kann ferner bis zu einer Wassertiefe von 35m und mehr eingesetzt werden. Darüber hinaus kann die Erodiervorrichtung auch bei hohen Strahlungswerten eingesetzt werden.

Ein weiterer Vorteil besteht darin, dass mit der erfindungsgemäßen Erodiervorrichtung eine hohe Maßgenauigkeit gewährleistet wird. Des Weiteren besteht kein Problem, mit unterschiedlichen Werkstoffqualitäten (Versprödung, Aufhärtung) umzugehen.

Gemäß einer besonders bevorzugten Weiterbildung der Erfindung ist vorgesehen, dass das Bewegungsleitsystem wenigstens ein erstes Element zur Durchführung von wenigstens drei axialen Bewegungen der Erodierelektrode aufweist, wobei die drei Achsen vorzugsweise zueinander senkrecht stehen.

Mindestens drei der wenigstens vier vorgesehenen Achsen zum Ausführen von Bewegungen der Erodierelektrode sind somit zur Ausführung von axialen Bewegungen oder Linearbewegungen der Erodierelektrode vorgesehen.

Gemäß einer bevorzugten Ausführungsvariante der Erfindung ist vorgesehen, dass das erste Element zur Durchführung der axialen Bewegungen wenigstens drei Schlitten umfasst, wobei jeder Schlitten entlang einer der Achsen beweglich gelagert ist, so dass je ein Schlitten eine Bewegung, insbesondere eine axiale Bewegung oder Linearbewegung, der Erodierelektrode entlang einer der Achsen ermöglicht.

Ferner kann vorgesehen sein, dass das erste Element Verbindungselemente zur Verbindung der Schlitten untereinander aufweist, wobei jeder Schlitten mit einem benachbarten Schlitten verbunden ist.

Gemäß einer zweckmäßigen und vorteilhaften Weiterbildung weist das Bewegungsleitsystem wenigstens ein zweites Element zur Durchführung einer Rotationsbewegung um eine Rotationsachse der Erodierelektrode auf.

Mindestens eine der wenigstens vier vorgesehenen Achsen zum Ausführen von Bewegungen der Erodierelektrode ist somit zur Ausführung einer Rotationsbewegung vorgesehen. Es kann auch vorgesehen sein, dass die Rotationsachse eine der drei vorgesehenen Achsen zur Ausführung von axialen Bewegungen oder Linearbewegungen ist oder mit dieser zusammenfällt.

Besonders bevorzugt sind vier Achsen zum Ausführen von Bewegungen der Erodierelektrode vorgesehen, wobei drei der vier Achsen zueinander senkrecht stehen und zur Ausführung von axialen Bewegungen oder Linearbewegungen der Erodierelektrode vorgesehen und eine vierte Achse zur Ausführung einer Rotationsbewegung der Erodierelektrode vorgesehen ist, wobei die als Rotationsachse vorgesehen vierte Achse eine der drei Achsen zur Ausführung der axialen Bewegungen ist oder mit dieser zusammenfällt.

Durch diese Ausbildung der Erodiervorrichtung ist eine Kombinationsbewegung oder sind Kombinationsbewegungen der Erodierelektrode möglich, so dass diese, vorzugsweise beliebig, und, insbesondere während des Erodierprozesses, im Raum bewegbar ist.

Bevorzugt weist das zweite Element eine Welle zur Übertragung der Rotationsbewegung auf die Erodierelektrode auf, wobei die Erodierelektrode des Erodierkopfes an der Welle angebracht ist.

Beispielsweise umfasst die Erodiervorrichtung einen oder mehrere Motoren zum Antrieb des ersten Elements und/oder des zweiten Elements.

Gemäß einer Weiterbildung der Erfindung kann vorgesehen sein, dass die Erodierelektrode zumindest abschnittsweise, vorzugsweise in ihrem Arbeitsbereich, zumindest teilweise rund, insbesondere halbrund, oder ringförmig, insbesondere halbringförmig, oder ellipsenförmig, insbesondere halbellipsenförmig, oder scheibenförmig, insbesondere halbscheibenförmig, ausgebildet ist.

Die Erodiervorrichtung weist eine Steuereinrichtung zur Steuerung und/oder Fernsteuerung des Erodierkopfes und/oder des Bewegungsleitsystems und/oder der Erodierelektrode auf.

Die Erodiervorrichtung weist ein Befestigungselement zur Befestigung des Erodierkopfes an metallischen Komponenten der Wandung, vorzugsweise der Innenwand, des Reaktordruckbehälters auf. Ferner kann vorgesehen sein, dass das Befestigungselement ein oder mehrere Saugelemente, vorzugsweise Saugnäpfe, umfasst.

Die Erodiervorrichtung weist eine Sammel- und/oder Auffangvorrichtung zum Sammeln und/oder Auffangen der Werkstoffproben nach dem Erodierprozess auf Erfindungsgemäß ist die Verwendung einer Erodiervorrichtung an metallischen

Komponenten einer Wandung, vorzugsweise der Innenwand, eines Reaktordruckbehälters von Kernkraftwerken, zur Durchführung eines Erodierprozesses zur Entnahme von Werkstoffproben aus den metallischen Komponenten der Wandung, vorzugsweise der Innenwand, des Reaktordruckbehälters, insbesondere von der Innenwand des Reaktordruckbehälters, vorgesehen, wobei die Erodiervorrichtung eine erfindungsgemäße Erodiervorrichtung ist. Das erfindungsgemäße Verfahren zur Entnahme von Werkstoffproben aus metallischen Komponenten der Wandung eines Reaktordruckbehälters von Kernkraftwerken, mittels Erodieren mit einer erfindungsgemäßen Erodiervorrichtung, umfasst die Schritte:
- Hinführen wenigstens des Erodierkopfes an die metallische Komponente,
- Positionieren des Erodierkopfes der Erodiervorrichtung an der metallischen Komponente derart, dass an einer vorgesehenen Position der Erodierprozess initiiert werden kann,
- Erodieren von Werkstoffproben aus der metallischen Komponente durch Bewegen der Erodierelektrode mittels des Bewegungsleitsystems während des Erodierprozesses zur Erzeugung einer vorgesehenen Werkstoffprobengeometrie, wobei das Bewegen der Erodierelektrode mittels des Bewegungsleitsystems während des Erodierprozesses verschiedene Linear- und Rotationsbewegungen einschließt,
- Sammeln und/oder Auffangen der Werkstoffprobe,
- Wegführen der Werkstoffprobe und/oder des Erodierkopfes der Erodiervorrichtung von der metallischen Komponente.

Eine Weiterbildung des Verfahrens sieht vor, dass die Erodiervorrichtung ein Bewegungsleitsystem aufweist, wobei das Bewegungsleitsystem wenigstens ein erstes Element aufweist, wobei mittels des ersten Elements wenigstens drei axiale Bewegungen der Erodierelektrode durchführbar sind, wobei die drei Achsen vorzugsweise zueinander senkrecht stehen.

Eine weitere Ausführungsvariante des Verfahrens sieht vor, dass die Erodiervorrichtung ein Bewegungsleitsystem aufweist, wobei das Bewegungsleitsystem wenigstens ein zweites Element aufweist, wobei mittels des zweiten Elements eine Rotationsbewegung um eine Rotationsachse der Erodierelektrode durchführbar ist.

Das Bewegen der Erodierelektrode mittels des Bewegungsleitsystems während des Erodierprozesses kann eine Kombination verschiedener Linear- und Rotationsbewegungen sein.

Alle mit der erfindungsgemäßen Erodiervorrichtung möglichen Bewegungen der Erodierelektrode können gleichzeitig ansteuerbar sein, insbesondere auch während des Erodierprozesses, so dass sich eine Kombinationsbewegung ergibt. Es ist eine Steuereinrichtung vorgesehen, welche mittels derer die Bewegung oder Bewegungen einzeln oder gleichzeitig ansteuerbar, vorzugsweise fernsteuerbar sind.

Die Erodierprozess sowie das Bewegen der Erodierelektrode sind gleichzeitig durchführbar.

Es ist vorgesehen sein, dass die Erodiervorrichtung ein Bewegungsleitsystem aufweist, wobei die Erodierelektrode mittels des Bewegungsleitsystem zum einen zur Positionierung der Erodierelektrode vor dem Erodierprozess an eine vorgesehene Position bewegt wird und zum anderen die Erodierelektrode zur Erzeugung einer vorgesehenen Werkstoffprobengeometrie während des Erodierprozesses bewegt wird.

Eine bevorzugte Ausführungsform des erfindungsgemäßen Verfahrens ist in Anspruch 11 definiert.

Eine Ausführungsvariante des erfindungsgemäßen Verfahrens sieht vor, dass das Erodieren stufenweise in mehreren Schritten durchgeführt wird.

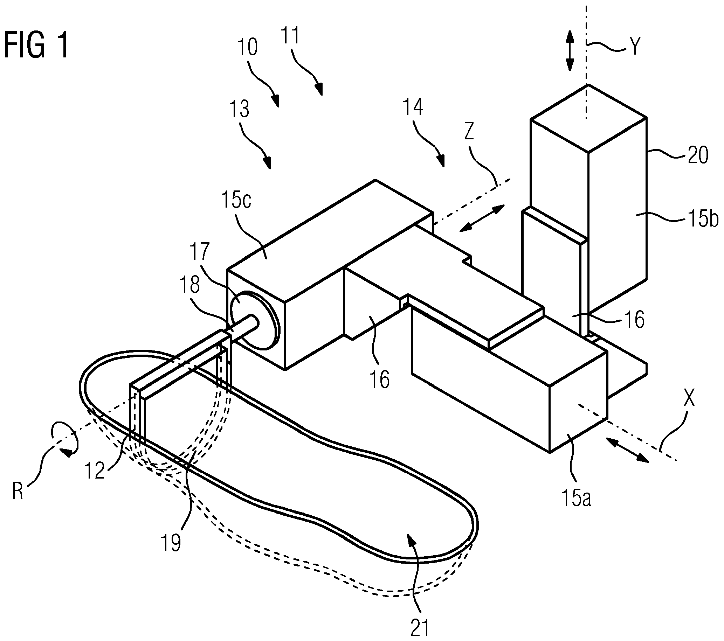

Die Erfindung wird nachstehend auch hinsichtlich weiterer Merkmale und Vorteile anhand der Beschreibung eines Ausführungsbeispiels und unter Bezugnahme auf die beiliegende Zeichnung näher erläutert. Dabei zeigt FIG 1 eine schematische Darstellung eines Ausführungsbeispiels einer erfindungsgemäßen Erodiervorrichtung. Einander entsprechende Teile und Komponenten sind in den Figuren mit den gleichen Bezugszeichen bezeichnet.

FIG 1 zeigt eine Erodiervorrichtung 10 zur Durchführung eines Erodierprozesses zur Entnahme von Werkstoffproben aus der Innenwand eines Reaktordruckbehälters, umfassend einen Erodierkopf 11. Der Erodierkopf 11 weist eine Erodierelektrode 12 auf, wobei die Erodierelektrode 12 abschnittsweise eine konvexe Außenform aufweist. Ferner weist der Erodierkopf 11 ein Bewegungsleitsystem 13 zum Positionieren und/oder Bewegen der Erodierelektrode 12 auf, wobei das Bewegungsleitsystem 13 wenigstens vier Achsen X, Y, Z, R zum Ausführen von Bewegungen der Erodierelektrode 12 zur Erzeugung einer vorgesehenen Werkstoffprobengeometrie 21 umfasst, wobei die Bewegung oder Bewegungen auch während des Erodierprozesses ausführbar sind.

Das Bewegungsleitsystem 13 weist ein erstes Element 14 zur Durchführung von drei axialen Bewegungen der Erodierelektrode 12 auf, wobei die drei Achsen X, Y, Z zueinander senkrecht stehen.

Das erste Element 14 umfasst zur Durchführung der axialen Bewegungen wenigstens drei Schlitten 15a, 15b, 15c, wobei jeder Schlitten 15a, 15b, 15c entlang einer der Achsen X, Y, Z beweglich gelagert ist, so dass je ein Schlitten 15a; 15b; 15c eine Bewegung der Erodierelektrode 12 entlang einer der Achsen X, Y, Z ermöglicht.

Das erste Element 14 weist zudem Verbindungselemente 16 zur Verbindung der Schlitten 15a; 15b; 15c untereinander auf, wobei jeder Schlitten 15a, 15b, 15c mit einem benachbarten Schlitten 15a, 15b, 15c verbunden ist.

Das Bewegungsleitsystem 13 weist ein zweites Element 17 zur Durchführung einer Rotationsbewegung um eine Rotationsachse R der Erodierelektrode 12 auf. Das zweite Element 17 umfasst ferner eine Welle 18 zur Übertragung einer Rotationsbewegung auf die Erodierelektrode 12, wobei die Erodierelektrode 12 des Erodierkopfes 11 an der Welle 18 angebracht ist.

Die Erodierelektrode 12 ist in ihrem Arbeitsbereich 19 teilweise rund, insbesondere halbrund, ausgebildet.

Die Erodiervorrichtung 10 weist auch eine Steuereinrichtung (nicht in der Figur dargestellt) zur Steuerung und/oder Fernsteuerung des Erodierkopfes 11, des Bewegungsleitsystems 13 und der Erodierelektrode 12 auf.

Die Erodiervorrichtung 10 weist ferner ein Befestigungselement 20 zur Befestigung des Erodierkopfes 11 an einer Wandung des Reaktordruckbehälters auf. Das Befestigungselement 20 umfasst mehrere als Saugnäpfe ausgebildete Saugelemente.

Die Erodiervorrichtung 10 weist des Weiteren eine Sammel- und/oder Auffangvorrichtung (nicht in der Figur dargestellt) zum Sammeln und/oder Auffangen der Werkstoffproben nach dem Erodierprozess auf.

Die Erodiervorrichtung 10 wird erfindungsgemäß zur Durchführung eines Erodierprozesses zur Entnahme von Werkstoffproben der Innenwand eines Reaktordruckbehälters verwendet.

Mit der erfindungsgemäßen Erodiervorrichtung 10 kann ein Verfahren zur Entnahme von Werkstoffproben aus der Innenwand eines Reaktordruckbehälters mittels Erodieren durchgeführt werden, welches die Schritte umfasst:
- Einführen wenigstens des Erodierkopfes 11 der Erodiervorrichtung 10 in den Reaktordruckbehälter,
- Positionieren des Erodierkopfes 11 der Erodiervorrichtung 10 im Reaktordruckbehälter derart, dass an einer vorgesehenen Position der Erodierprozess initiiert werden kann,
- Erodieren von Werkstoffproben aus der Wandung des Reaktordruckbehälters durch Bewegen der Erodierelektrode 12 mittels des Bewegungsleitsystems 13 während des Erodierprozesses zur Erzeugung einer vorgesehenen Werkstoffprobengeometrie 21,
- Sammeln und/oder Auffangen der Werkstoffprobe,
- Herausführen der Werkstoffprobe und/oder des Erodierkopfes 11 der Erodiervorrichtung 10 aus dem Reaktordruckbehälter.

Die Erodiervorrichtung 10 weist ein Befestigungselement 20 zur Befestigung des Erodierkopfes 11 an der Innenwand eines Reaktordruckbehälters auf und der Erodierkopf 11 nach seinem Einführen in den Reaktordruckbehälter mittels des Befestigungselements 20 an der Innenwand des Reaktordruckbehälters befestigt wird.

Das Erodieren kann beispielsweise stufenweise in mehreren Schritten durchgeführt werden.

### Bezugszeichenliste

- 10: Erodiervorrichtung
- 11: Erodierkopf
- 12: Erodierelektrode
- 13: Positionier- und/oder Bewegungsleitsystem
- 14: erstes Element
- 15a: Schlitten
- 15b: Schlitten
- 15c: Schlitten
- 16: Verbindungselement
- 17: zweites Element
- 18: Welle
- 19: Arbeitsbereich
- 20: Befestigungselement
- 21: Werkstoffprobengeometrie

- X: Achse
- Y: Achse
- Z: Achse
- R: Rotationsachse

## Patentansprüche

1. Erodiervorrichtung (10) zur Durchführung eines Erodierprozesses zur Entnahme von Werkstoffproben aus metallischen Komponenten einer Wandung, vorzugsweise der Innenwand, eines Reaktordruckbehälters von Kernkraftwerken,
umfassend einen Erodierkopf (11) und ein Befestigungselement (20) zur Befestigung des Erodierkopfes (11) an metallischen Komponenten der Wandung, vorzugsweise der Innenwand, des Reaktordruckbehälters,
wobei der Erodierkopf (11) eine Erodierelektrode (12) aufweist, wobei die Erodierelektrode (12) zumindest abschnittsweise eine konvexe oder eckige Außenform aufweist, und
wobei der Erodierkopf (11) ein Bewegungsleitsystem (13) zum Bewegen der Erodierelektrode (12) aufweist, wobei die Erodierelektrode (12) mit dem Bewegungsleitsystem (13) zum einen zur Positionierung der Erodierelektrode (12) an der metallischen Komponente vor dem Erodierprozess bewegbar ist, derart, dass an einer vorgesehenen Position der Erodierprozess initiiert werden kann, und die Erodierelektrode (12) zum anderen zur Erzeugung einer vorgesehenen Werkstoffprobengeometrie während des Erodierprozesses bewegbar ist, wobei das Bewegungsleitsystem (13) wenigstens vier Achsen (X; Y; Z; R) zum Ausführen einer Kombination verschiedener Linear- und Rotationsbewegungen der Erodierelektrode (12) während des Erodierprozesses zur Erzeugung einer vorgesehenen Werkstoffprobengeometrie (21) umfasst, und
wobei die Erodiervorrichtung (10) eine Steuereinrichtung umfasst, die dazu ausgebildet ist, das Bewegungsleitsystem (13) zum Ausführen der verschiedenen Linear- und Rotationsbewegungen der Erodierelektrode (12) einzeln oder gleichzeitig während des Erodierprozesses zur Erzeugung einer vorgesehenen Werkstoffprobengeometrie (21) zu steuern,
wobei die Erodiervorrichtung (10) eine Sammel- und/oder Auffangvorrichtung zum Sammeln und/oder Auffangen der Werkstoffproben nach dem Erodierprozess aufweist.

2. Erodiervorrichtung nach Anspruch 1, **dadurch gekennzeichnet, dass** das Bewegungsleitsystem (13) wenigstens ein erstes Element (14) zur Durchführung von wenigstens drei axialen Bewegungen der Erodierelektrode (12) aufweist, wobei die drei Achsen (X; Y; Z) vorzugsweise zueinander senkrecht stehen.

3. Erodiervorrichtung nach Anspruch 2, **dadurch gekennzeichnet, dass** das erste Element (14) zur Durchführung der axialen Bewegungen wenigstens drei Schlitten (15a; 15b; 15c) umfasst, wobei jeder Schlitten (15a; 15b; 15c) entlang einer der Achsen (X; Y; Z) beweglich gelagert ist, so dass je ein Schlitten (15a; 15b; 15c) eine Bewegung der Erodierelektrode (12) entlang einer der Achsen (X; Y; Z) ermöglicht.

4. Erodiervorrichtung nach Anspruch 3, **dadurch gekennzeichnet, dass** das erste Element (14) Verbindungselemente (16) zur Verbindung der Schlitten (15a; 15b; 15c) untereinander aufweist, wobei jeder Schlitten (15a; 15b; 15c) mit einem benachbarten Schlitten (15a; 15b; 15c) verbunden ist.

5. Erodiervorrichtung nach einem der vorhergehenden Ansprüche, **dadurch gekennzeichnet, dass** das Bewegungsleitsystem (13) wenigstens ein zweites Element (17) zur Durchführung einer Rotationsbewegung um eine Rotationsachse (R) der Erodierelektrode (12) aufweist.

6. Erodiervorrichtung nach Anspruch 5, **dadurch gekennzeichnet, dass** das zweite Element (17) eine Welle (18) zur Übertragung der Rotationsbewegung auf die Erodierelektrode (12) aufweist, wobei die Erodierelektrode (12) des Erodierkopfes (11) an der Welle (18) angebracht ist.

7. Erodiervorrichtung nach einem der vorhergehenden Ansprüche, **dadurch gekennzeichnet, dass** die Erodierelektrode (12) zumindest abschnittsweise zumindest teilweise rund oder ringförmig oder ellipsenförmig oder scheibenförmig ausgebildet ist.

8. Erodiervorrichtung nach einem der vorhergehenden Ansprüche, **dadurch gekennzeichnet, dass** das Befestigungselement (20) ein oder mehrere Saugelemente umfasst.

9. Verwendung einer Erodiervorrichtung (10) an metallischen Komponenten einer Wandung, vorzugsweise der Innenwand, eines Reaktordruckbehälters von Kernkraftwerken, zur Durchführung eines Erodierprozesses zur Entnahme von Werkstoffproben aus den metallischen Komponenten der Wandung, vorzugsweise der Innenwand, des Reaktordruckbehälters, wobei die Erodiervorrichtung (10) eine Erodiervorrichtung (10) nach einem der vorhergehenden Ansprüche ist.

10. Verfahren zur Entnahme von Werkstoffproben aus metallischen Komponenten einer Wandung eines Reaktordruckbehälters von Kernkraftwerken, mittels Erodieren mit einer Erodiervorrichtung (10) nach einem der vorhergehenden Ansprüche, umfassend die Schritte:
- Hinführen wenigstens des Erodierkopfes (11) an die metallische Komponente,
- Positionieren des Erodierkopfes (11) der Erodiervorrichtung (10) an der metallischen Komponente derart, dass an einer vorgesehenen Position der Erodierprozess initiiert werden kann,
- Erodieren von Werkstoffproben aus der metallischen Komponente durch Bewegen der Erodierelektrode (12) mittels des Bewegungsleitsystems (13) während des Erodierprozesses zur Erzeugung einer vorgesehenen Werkstoffprobengeometrie (21), wobei das Bewegen der Erodierelektrode (12) mittels des Bewegungsleitsystems während des Erodierprozesses verschiedene Linear- und Rotationsbewegungen einschließt,
- Sammeln und/oder Auffangen der Werkstoffprobe,
- Wegführen der Werkstoffprobe und/oder des Erodierkopfes (11) der Erodiervorrichtung (10) von der metallischen Komponente.

11. Verfahren nach Anspruch 10, **dadurch gekennzeichnet, dass** die Wandung eine Innenwand ist, dass das Hinführen wenigstens des Erodierkopfes (11) an die metallische Komponente das Einführen wenigstens des Erodierkopfes (11) der Erodiervorrichtung (10) in den Reaktordruckbehälter umfasst,
dass der Erodierkopf (11) nach seinem Einführen in den Reaktordruckbehälter mittels des Befestigungselements (20) an der Innenwand des Reaktordruckbehälters befestigt wird,
wobei Positionieren des Erodierkopfes (11) der Erodiervorrichtung (10) an der metallischen Komponente das Positionieren des Erodierkopfes (11) der Erodiervorrichtung im Reaktordruckbehälter umfasst, und
wobei das Wegführen der Werkstoffprobe und/oder des Erodierkopfes (11) der Erodiervorrichtung (10) von der metallischen Komponente das Herausführen der Werkstoffprobe und/oder des Erodierkopfes (11) der Erodiervorrichtung (10) aus dem Reaktordruckbehälter umfasst.

12. Verfahren nach Anspruch 10 oder 11, **dadurch gekennzeichnet, dass** das Erodieren stufenweise in mehreren Schritten durchgeführt wird.

## Claims

1. Eroding device (10) for carrying out an eroding process for taking material samples from metallic components of a wall, preferably the inner wall, of a reactor pressure vessel of nuclear power plants,
comprising an eroding head (11) and a fastening element (20) for fastening the eroding head (11) to metallic components of the wall, preferably the inner wall, of the reactor pressure vessel,
the eroding head (11) having an eroding electrode (12), the eroding electrode (12) having, at least in sections, a convex or angular outer shape, and
wherein the eroding head (11) has a motion control system (13) for moving the eroding electrode (12), wherein the eroding electrode (12) is movable with the motion control system (13), on the one hand, for positioning the eroding electrode (12) ) on the metallic component before the eroding process, in such a way that the eroding process can be initiated at a designated position, and the eroding electrode (12) can also be moved during the eroding process in order to produce a designated material sample geometry, the motion control system (13) comprises at least four axes (X; Y; Z; R) for executing a combination of different linear and rotational movements of the eroding electrode (12) during the eroding process to produce a desired material sample geometry (21), and
wherein the eroding device (10) comprises a control device which is designed to control the motion control system (13) for executing the various linear and rotational movements of the eroding electrode (12) individually or simultaneously during the eroding process for producing a planned material sample geometry (21),
wherein the eroding device (10) comprises a collecting and/or catching device for collecting and/or catching the material samples after the eroding process.

2. An eroding device according to claim 1, **characterised in that** the motion control system (13) has at least one first element (14) for carrying out at least three axial movements of the eroding electrode (12), the three axes (X; Y; Z) preferably being perpendicular to one another.

3. An eroding device according to claim 2, **characterised in that** the first element (14) comprises at least three carriages (15a; 15b; 15c) for carrying out the axial movements, each carriage (15a; 15b; 15c) being mounted movably along one of the axes (X; Y; Z), so that one carriage (15a; 15b; 15c) in each case enables a movement of the eroding electrode (12) along one of the axes (X; Y; Z).

4. An eroding device according to claim 3, **characterised in that** the first element (14) has connecting elements (16) for connecting the carriages (15a; 15b; 15c) to one another, each carriage (15a; 15b; 15c) being connected to an adjacent carriage (15a; 15b; 15c).

5. An eroding device according to one of the preceding claims, **characterised in that** the motion control system (13) has at least one second element (17) for carrying out a rotational movement about an axis of rotation (R) of the eroding electrode (12).

6. An eroding device according to claim 5, **characterised in that** the second element (17) has a shaft (18) for transmitting the rotational movement to the eroding electrode (12), the eroding electrode (12) of the eroding head (11) being attached to the shaft (18).

7. An eroding device according to one of the preceding claims, **characterised in that** the eroding electrode (12) is at least partially round or annular or elliptical or disc-shaped, at least in sections.

8. An eroding device according to one of the preceding claims, **characterised in that** the fastening element (20) comprises one or more suction elements.

9. Use of an eroding device (10) on metallic components of a wall, preferably the inner wall, of a reactor pressure vessel of a nuclear power plant, for carrying out an eroding process for the removal of material from metallic components of the
wall, preferably the
inner wall, of the
reactor pressure vessel, the eroding device (10) being an eroding device (10)
according to one of the preceding claims.

10. A method for removing material samples from metallic components of a wall of a reactor pressure vessel of nuclear power plants, by means of eroding with an eroding device (10) according to one of the preceding claims, comprising the steps:
- Moving at least the eroding head (11) towards the metallic component,
- Positioning the eroding head (11) of the eroding device (10) on the metallic component in such a way that the eroding process can be initiated at a designated position,
- Eroding of material samples from the metallic component by moving the eroding electrode (12) by means of the motion control system (13) during the eroding process to produce a planned material sample geometry (21), wherein the movement of the eroding electrode (12) by means of the motion control system during the eroding process includes various linear and rotational movements,
- Collecting and/or catching the material sample,
- Moving the material sample and/or the eroding head (11) of the eroding device (10) away from the metallic component.

11. A method according to claim 10, **characterised in that** the wall is an inner wall, **in that** the guiding of at least the eroding head (11) to the metallic component comprises the introduction of at least the eroding head (11) of the eroding device (10) into the reactor pressure vessel,
that the eroding head (11), after its insertion into the reactor pressure vessel, is attached to the inner wall of the reactor pressure vessel by means of the fastening element (20),
wherein positioning the eroding head (11) of the eroding device (10) on the metallic component comprises positioning the eroding head (11) of the eroding device in the reactor pressure vessel, and
wherein the removal of the material sample and/or the eroding head (11) of the eroding device (10) from the metallic component comprises the removal of the material sample and/or the eroding head (11) of the eroding device (10) from the reactor pressure vessel.

12. A method according to claim 10 or 11, **characterised in that** the eroding is carried out in stages in several steps.

## Revendications

1. Dispositif d'érosion (10) pour effectuer un processus d'érosion pour le prélèvement d'échantillons de matériaux à partir de composants métalliques d'une paroi, de préférence de la paroi intérieure, d'une cuve sous pression de réacteur de centrales nucléaires,
comprenant une tête d'érosion (11) et un élément de fixation (20) pour la fixation de la tête d'érosion (11) sur des composants métalliques de la paroi, de préférence de la paroi intérieure, de la cuve sous pression de réacteur,
dans lequel la tête d'érosion (11) présente une électrode d'érosion (12), dans lequel l'électrode d'érosion (12) présente au moins par sections une forme extérieure convexe ou anguleuse, et
dans lequel la tête d'érosion (11) présente un système de guidage de mouvement (13) pour déplacer l'électrode d'érosion (12), dans lequel l'électrode d'érosion (12) peut être déplacée avec le système de guidage de mouvement (13) d'une part pour le positionnement de l'électrode d'érosion (12) sur le composant métallique avant le processus d'érosion, de telle sorte que le processus d'érosion puisse être initié à une position prévue, et l'électrode d'érosion (12) peut être déplacée d'autre part pour produire une géométrie d'échantillon de matériau prévue pendant le processus d'érosion, dans lequel le système de guidage de mouvement (13) comprend au moins quatre axes (X; Y; Z ; R) pour exécuter une combinaison de différents mouvements linéaires et de rotation de l'électrode d'érosion (12) pendant le processus d'érosion pour produire une géométrie d'échantillon de matériau (21) prévue, et
dans lequel le dispositif d'érosion (10) comprend un appareil de commande qui est conçu pour commander le système de guidage de mouvement (13) pour exécuter les différents mouvements linéaires et de rotation de l'électrode d'érosion (12) individuellement ou simultanément pendant le processus d'érosion pour produire une géométrie d'échantillon de matériau (21) prévue,
dans lequel le dispositif d'érosion (10) présente un dispositif de collecte et/ou de réception pour collecter et/ou recevoir les échantillons de matériau après le processus d'érosion.

2. Dispositif d'érosion selon la revendication 1, **caractérisé en ce que** le système de guidage de mouvement (13) comprend au moins un premier élément (14) pour effectuer au moins trois mouvements axiaux de l'électrode d'érosion (12), dans lequel les trois axes (X ; Y ; Z) sont de préférence perpendiculaires entre eux.

3. Dispositif d'érosion selon la revendication 2, **caractérisé en ce que** le premier élément (14) pour effectuer les mouvements axiaux comprend au moins trois chariots (15a ; 15b ; 15c), dans lequel chaque chariot (15a ; 15b ; 15c) est monté mobile le long d'un des axes (X ; Y ; Z), de sorte que chaque chariot (15a ; 15b ; 15c) permet un mouvement de l'électrode d'érosion (12) le long d'un des axes (X ; Y ; Z).

4. Dispositif d'érosion selon la revendication 3, **caractérisé en ce que** le premier élément (14) présente des éléments de liaison (16) pour relier les chariots (15a ; 15b ; 15c) entre eux, dans lequel chaque chariot (15a ; 15b ; 15c) est relié à un chariot (15a ; 15b ; 15c) voisin.

5. Dispositif d'érosion selon l'une quelconque des revendications précédentes, **caractérisé en ce que** le système de guidage de mouvement (13) présente au moins un deuxième élément (17) pour effectuer un mouvement de rotation autour d'un axe de rotation (R) de l'électrode d'érosion (12).

6. Dispositif d'érosion selon la revendication 5, **caractérisé en ce que** le deuxième élément (17) présente un arbre (18) pour transmettre le mouvement de rotation à l'électrode d'érosion (12), dans lequel l'électrode d'érosion (12) de la tête d'érosion (11) est appliquée sur l'arbre (18).

7. Dispositif d'érosion selon l'une quelconque des revendications précédentes, **caractérisé en ce que** l'électrode d'érosion (12) est au moins partiellement ronde ou annulaire ou elliptique ou en forme de disque, au moins par sections.

8. Dispositif d'érosion selon l'une quelconque des revendications précédentes, **caractérisé en ce que** l'élément de fixation (20) comprend un ou plusieurs éléments d'aspiration.

9. Utilisation d'un dispositif d'érosion (10) sur des composants métalliques d'une paroi, de préférence la paroi intérieure, d'une cuve sous pression de réacteur de centrales nucléaires, pour effectuer un processus d'érosion pour le prélèvement d'échantillons de matériau à partir des composants métalliques de
la paroi, de préférence la
paroi intérieure, de la
cuve sous pression de réacteur, dans lequel le dispositif d'érosion (10) est un
dispositif d'érosion (10) selon l'une quelconque des revendications précédentes.

10. Procédé de prélèvement d'échantillons de matériau à partir de composants métalliques d'une paroi d'une cuve sous pression de réacteur de centrales nucléaires, par érosion avec un dispositif d'érosion (10) selon l'une quelconque des revendications précédentes, comprenant les étapes suivantes :
- l'amenée d'au moins la tête d'érosion (11) du composant métallique,
- le positionnement de la tête d'érosion (11) du dispositif d'érosion (10) sur le composant métallique, de telle sorte que le processus d'érosion puisse être initié à une position prévue,
- l'érosion d'échantillons de matériau à partir du composant métallique par déplacement de l'électrode d'érosion (12) au moyen du système de guidage de mouvement (13) pendant le processus d'érosion pour produire une géométrie d'échantillon de matériau (21) prévue, dans lequel le déplacement de l'électrode d'érosion (12) au moyen du système de guidage de mouvement pendant le processus d'érosion inclut différents mouvements linéaires et de rotation,
- la collecte et/ou réception de l'échantillon de matériau,
- l'éloignement de l'échantillon de matériau et/ou de la tête d'érosion (11) du dispositif d'érosion (10) du composant métallique.

11. Procédé selon la revendication 10, **caractérisé en ce que** la paroi est une paroi interne, **en ce que** l'amenée d'au moins la tête d'érosion (11) au composant métallique comprend l'introduction d'au moins la tête d'érosion (11) du dispositif d'érosion (10) dans la cuve sous pression de réacteur,
**en ce que** la tête d'érosion (11), après son introduction dans la cuve sous pression de réacteur, est fixée au moyen de l'élément de fixation (20) sur la paroi intérieure de la cuve sous pression de réacteur,
dans lequel le positionnement de la tête d'érosion (11) du dispositif d'érosion (10) sur le composant métallique comprend le positionnement de la tête d'érosion (11) du dispositif d'érosion dans la cuve sous pression de réacteur, et
dans lequel l'éloignement de l'échantillon de matériau et/ou de la tête d'érosion (11) du dispositif d'érosion (10) du composant métallique comprend la sortie de l'échantillon de matériau et/ou de la tête d'érosion (11) du dispositif d'érosion (10) de la cuve sous pression de réacteur.

12. Procédé selon la revendication 10 ou 11, **caractérisé en ce que** l'érosion est effectuée de manière progressive en plusieurs étapes.
